# EUROPEAN PATENT APPLICATION

(11) **EP 4 756 897 A1**
(43) Date of publication of application: **10.06.2026**
(21) Application number: 24850509.1
(22) Date of filing: 20.03.2024
(51) Int. Cl.: H01M 4/133, H01M 4/131, H01M 4/02, H01M 4/13, H01M 10/0525

(54) **ELECTRODE SHEET, BATTERY CELL, BATTERY, ELECTRIC DEVICE, AND PREPARATION METHOD FOR ELECTRODE SHEET**

(30) Priority: 04.08.2023 CN 202310980362
(71) Applicant: Contemporary Amperex Technology Co., Limited, Ningde, Fujian 352100 (CN)
(72) Inventor: WU, Kai, Ningde, Fujian 352100 (CN); LI, Xiao, Ningde, Fujian 352100 (CN); XU, Xiaofu, Ningde, Fujian 352100 (CN)
(74) Representative: Kraus & Lederer PartGmbB
(86) International application number: PCT/CN2024/082703
(87) International publication number: WO 2025/030850

(57) **Abstract**

Provided in the embodiments of the present application are an electrode sheet, a battery cell, a battery, an electric device, and a preparation method for the electrode sheet, which can effectively ameliorate the problem of powder shedding during a cutting process of an electrode sheet to be cut, thereby reducing the risk of an internal short circuit occurring in a battery cell caused by overlapping between a positive electrode sheet and a negative electrode sheet, and thus improving the yield of the battery cell. The electrode sheet comprises: a first current collector, which comprises a first body and a tab region connected to an edge of the first body, the first body comprising a coated region and an edge region; and a first electrically conductive layer disposed on a surface of the coated region, wherein the thickness of the electrode sheet in the edge region is less than that of the electrode sheet in the coated region.

## Description

### CROSS-REFERENCE TO RELATED APPLICATIONS

The present application claims priority to the Chinese patent application 202310980362.0 filed on August 4, 2023 and entitled "ELECTRODE SHEET, BATTERY CELL, BATTERY, ELECTRIC DEVICE, AND PREPARATION METHOD FOR ELECTRODE SHEET", which is incorporated herein by reference in its entirety.

### TECHNICAL FIELD

Embodiments of the present application relate to the field of battery technology, and in particular, to an electrode sheet, a battery cell, a battery, an electric device, and a preparation method for an electrode sheet.

### BACKGROUND

With the growing aggravation of environmental pollution, the new energy industry has attracted increasing attention from people. In the new energy industry, battery technology is an important factor related to its development.

The development of battery technology needs to consider multiple design factors, such as energy density, cycle life, yield rate, and the like. The design of electrode sheets in battery cells is crucial to the yield rate and service performance of the battery cells. Therefore, how to provide an electrode sheet to increase the yield rate of battery cells has become an urgent technical problem to be solved in the art.

### SUMMARY

Embodiments of the present application provide an electrode sheet, a battery cell, a battery, an electric device, and a preparation method for an electrode sheet, which can increase the yield rate of battery cells.

According to a first aspect, an electrode sheet is provided and includes: a first current collector, where the first current collector includes a first body and a tab region connected to an edge of the first body, and the first body includes a coated region and an edge region; and a first conductive layer, where the first conductive layer is disposed on a surface of the coated region; where a thickness of the electrode sheet in the edge region is less than a thickness of the electrode sheet in the coated region.

In the embodiments of the present application, since the thickness of the electrode sheet in the edge region is less than the thickness of the electrode sheet in the coated region, an edge of the edge region serves as a cutting edge. During the slitting and/or die-cutting process of the electrode sheet to be cut, the powder falling problem of the electrode sheet to be cut during the cutting process can be effectively alleviated, thereby reducing the risk of internal short circuit of the battery cell caused by overlapping of the positive electrode sheet and the negative electrode sheet, and further increasing the yield rate of the battery cell.

In some implementations, a dimension L₁ of the edge region in a first direction satisfies: 0 mm < L₁ ≤ 3 mm, where the first direction is perpendicular to a thickness direction of the electrode sheet.

In the embodiments of the present application, by controlling the dimension L₁ of the edge region in the first direction to be in the range of 0 mm < L₁ ≤ 3 mm, with the first direction perpendicular to the thickness direction of the electrode sheet, the yield rate of the battery cell and the energy density of the battery cell can be effectively balanced, thereby improving the service performance of the battery.

In some implementations, the electrode sheet further includes a first layer disposed on a surface of the edge region, where a thickness of the first layer is less than a thickness of the first conductive layer. In this way, in the embodiments of the present application, during the slitting and/or die-cutting process of the electrode sheet to be cut, since an edge of the edge region serves as a cutting edge, and the thickness of the first layer is less than the thickness of the first conductive layer, the powder falling problem of the electrode sheet to be cut during the cutting process can be effectively alleviated, thereby reducing the risk of internal short circuit of the battery cell caused by overlapping of the positive electrode sheet and the negative electrode sheet, and further increasing the yield rate of the battery cell.

In some implementations, a thickness D₁ of the first layer satisfies: 0 mm < D₁ ≤ 1 mm.

In the embodiments of the present application, by controlling the thickness D₁ of the first layer to be in the range of 0 mm < D₁ ≤ 1 mm, disposing the first layer on a surface of the edge region of the electrode sheet, and controlling the thickness of the first layer to be less than the thickness of the first conductive layer, compared with the prior art, the risk of internal short circuit of the battery cell can be reduced, thereby increasing the yield rate of the battery cell.

In some implementations, the first layer includes a second conductive layer. In this way, in the embodiments of the present application, by disposing the second conductive layer on a surface of the edge region, the deposition area of metal ions on the electrode sheet can be increased, the electrochemical performance of the battery cell can be improved, thereby improving the service performance of the battery. Meanwhile, during the slitting or die-cutting process of the electrode sheet to be cut, since an edge of the edge region serves as a cutting edge, and the thickness of the second conductive layer is less than the thickness of the first conductive layer, the powder falling phenomenon of the conductive layer during the slitting process or the ablation phenomenon of the electrode sheet at the cutting position after laser die-cutting can be alleviated, thereby reducing the risk of internal short circuit of the battery cell, and further increasing the yield rate of the battery cell.

In some implementations, a material of the second conductive layer includes at least one of the following materials: carbon nanotubes, graphene, conductive graphite, and conductive carbon. In this way, in the embodiments of the present application, by selecting the material of the second conductive layer from at least one of the following materials: carbon nanotubes, graphene, conductive graphite, and conductive carbon, during the slitting or die-cutting process of the electrode sheet to be cut, since an edge of the edge region serves as a cutting edge, and the thickness of the second conductive layer is less than the thickness of the first conductive layer, compared with cutting the electrode sheet in the coated region provided with the first conductive layer, the powder falling phenomenon of the conductive layer during the cutting process can be alleviated, thereby reducing the risk of internal short circuit of the battery cell, and further increasing the yield rate of the battery cell.

In some implementations, the first layer includes an insulating layer. In this way, in the embodiments of the present application, during the cutting process of the electrode sheet to be cut, by disposing the insulating layer on a surface of the edge region with the thickness of the electrode sheet in the edge region less than the thickness of the electrode sheet in the coated region, the powder falling problem during the cutting process can be effectively alleviated, the risk of internal short circuit of the battery cell can be significantly reduced, and the yield rate of the battery cell can be increased.

In some implementations, a material of the insulating layer includes at least one of the following materials: boehmite, polyvinylidene fluoride, and ethylene propylene diene monomer rubber. In this way, in the embodiments of the present application, by selecting the material of the insulating layer from at least one of the following materials: boehmite, polyvinylidene fluoride, and ethylene propylene diene monomer rubber, and during the cutting process of the electrode sheet to be cut, by disposing the insulating layer on a surface of the edge region and controlling the thickness of the electrode sheet in the edge region to be less than the thickness of the electrode sheet in the coated region, the powder falling problem during the cutting process can be effectively alleviated, the risk of internal short circuit of the battery cell can be significantly reduced, and the yield rate of the battery cell can be improved.

In some implementations, the edge region includes a bare foil region. In this way, in the embodiments of the present application, by disposing a bare foil region on a surface of the edge region, to be specific, by exposing the surface of the edge region of the electrode sheet, the powder falling problem during the cutting process can be effectively alleviated, the risk of internal short circuit of the battery cell can be significantly reduced, and the yield rate of the battery cell can be improved.

In some implementations, a thickness D₂ of the first conductive layer satisfies: 2 mm ≤ D₂ ≤ 20 mm. In this way, in the embodiments of the present application, by controlling the thickness D₂ of the first conductive layer to be in the range of 2 mm ≤ D₂ ≤ 20 mm, the uniform distribution of the first conductive layer on the first current collector can be controlled, to balance the energy density of the battery cell and the yield rate of the battery cell.

In some implementations, the edge region includes a first edge region, where the first edge region is connected to a side of the coated region away from the tab region; and/or the edge region includes a second edge region, where the second edge region is connected between the tab region and the coated region.

In the embodiments of the present application, the edge region includes a first edge region, where the first edge region is connected to a side of the coated region away from the tab region; and/or the edge region includes a second edge region, where the second edge region is connected between the tab region and the coated region. In this way, during the cutting process of the electrode sheet to be cut, an edge of the edge region serves as a cutting edge, and the thickness of the electrode sheet in the edge region is less than the thickness of the electrode sheet in the coated region, which can effectively alleviate the powder falling problem of the electrode sheet to be cut during the cutting process, thereby reducing the risk of internal short circuit of the battery cell caused by overlapping of the positive electrode sheet and the negative electrode sheet, and further increasing the yield rate of the battery cell.

According to a second aspect, a battery cell is provided, including an electrode assembly, where the electrode assembly includes the electrode sheet according to any implementation of the first aspect.

In some implementations, the electrode sheet serves as a negative electrode sheet, the electrode assembly further includes a positive electrode sheet, and a position of a region of the positive electrode sheet corresponding to the edge region of the negative electrode sheet is provided with an insulating layer.

In the embodiments of the present application, the electrode sheet serves as a negative electrode sheet, and the electrode assembly further includes a positive electrode sheet. In this way, by disposing an insulating layer at a position of a region of the positive electrode sheet corresponding to the edge region of the negative electrode sheet, when metal ions are precipitated on a surface of the edge region of the negative electrode sheet, due to the arrangement of the insulating layer, the risk of internal short circuit of the battery cell caused by overlapping of the positive electrode sheet and the negative electrode sheet can be effectively reduced, thereby increasing the yield rate of the battery cell.

In some implementations, the battery cell is an alkali metal battery cell.

According to a third aspect, a battery is provided, including the battery cell according to any implementation of the second aspect.

According to a fourth aspect, an electric device is provided, including: the battery according to any implementation of the third aspect, where the battery is configured to provide electrical energy to the electric device.

In some implementations, the electric device may be a vehicle, a ship, or an aerospace vehicle, or the like.

According to a fifth aspect, a preparation method for an electrode sheet is provided, including: providing a second current collector, where the second current collector includes a second body and a tab forming region connected to an edge of the second body, and the second body includes a coated region and a cutting region; coating a first conductive layer on a surface of the coated region, such that a thickness of the electrode sheet in the cutting region is less than a thickness of the electrode sheet in the coated region; and performing cutting in the cutting region to form a target electrode sheet; where the target electrode sheet forms an edge region in the cutting region, and a thickness of the target electrode sheet in the edge region being less than a thickness of the target electrode sheet in the coated region.

In the embodiments of the present application, by controlling the thickness of the electrode sheet to be cut in the cutting region to be less than the thickness of the electrode sheet to be cut in the coated region, during the cutting process of in the cutting region, since the thickness of the electrode sheet to be cut in the cutting region is less than the thickness of the electrode sheet to be cut in the coated region, the powder falling problem during the cutting process can be alleviated, thereby reducing the risk of internal short circuit of the battery cell caused by overlapping of the positive electrode sheet and the negative electrode sheet, and further increasing the yield rate of the battery cell.

In some implementations, the coated region includes at least two sub-coated regions, at least one first sub-cutting region of the cutting region is disposed between two of the sub-coated regions, and the method further includes: performing cutting in the first sub-cutting region to form a first edge region on a side of the coated region away from the tab forming region.

In the embodiments of the present application, by disposing at least one first sub-cutting region of the cutting region between two of the sub-coated regions, and configuring the second current collector to be cut in the first sub-cutting region, in other words, performing cutting in the first sub-cutting region, to form a first edge region on a side of the coated region away from the tab forming region, since the thickness of the second current collector in the first sub-cutting region is less than the thickness of the second current collector in the sub-coated region, the powder falling problem during the cutting process can be alleviated, thereby reducing the risk of internal short circuit of the battery cell, and further increasing the yield rate of the battery cell.

In some implementations, a second sub-cutting region in the cutting region is disposed between the tab forming region and the coated region, and the method further includes: performing cutting in the second sub-cutting region to form the tab region and a second edge region of the target electrode sheet, where the second edge region is connected between the tab region and the coated region. In this way, during the die-cutting treatment of the second current collector, for example, laser die-cutting treatment, the die-cutting position is located in the second sub-cutting region between the tab forming region and the coated region, since the thickness of the second sub-cutting region is less than the thickness of the coated region, the ablation phenomenon appearing at the die-cutting position of the cutting region during the laser die-cutting process can be alleviated, and the powder falling phenomenon during the cutting process can be alleviated, thereby reducing the risk of internal short circuit of the battery cell, and further increasing the yield rate of the battery cell.

In some implementations, a dimension L₂ of the first sub-cutting region in a first direction satisfies: 0 mm < L₂ ≤ 6 mm, where the first direction is perpendicular to a thickness direction of the target electrode sheet. In this way, in the embodiments of the present application, by controlling the dimension L₂ of the first sub-cutting region in the first direction to be in the range of 0 mm < L₂ ≤ 6 mm, the yield rate of the battery cell and the energy density of the battery cell can be balanced.

In some implementations, a dimension L₃ of the second sub-cutting region in the first direction satisfies: 0 mm < L₃ ≤ 3 mm, where the first direction is perpendicular to the thickness direction of the target electrode sheet. In this way, in the embodiments of the present application, by controlling the dimension L₃ of the second sub-cutting region in the first direction to be in the range of 0 mm < L₃ ≤ 3 mm, the yield rate of the battery cell and the energy density of the battery cell can be balanced.

In some implementations, before the step of performing cutting in the cutting region, the method further includes: coating a second conductive layer on a surface of the cutting region, where a solid content of the second conductive layer is less than a solid content of the first conductive layer. In this way, in the embodiments of the present application, the second conductive layer is applied on a surface of the cutting region, with the solid content of the second conductive layer less than the solid content of the first conductive layer. During the slitting or die-cutting process of the second current collector, since the solid content of the second conductive layer is less than the solid content of the first conductive layer, in other words, the thickness of the second conductive layer formed after drying is less than the thickness of the first conductive layer, compared with cutting in the coated region provided with the first conductive layer, when performing cutting in the cutting region, the powder falling phenomenon of the conductive layer during the cutting process can be alleviated, thereby reducing the risk of internal short circuit of the battery cell, and further increasing the yield rate of the battery cell.

In some implementations, a solid content A₁ of the second conductive layer satisfies: 0% < A₁ ≤ 1%. In this way, in the embodiments of the present application, by controlling the range of the solid content A₁ of the second conductive layer to be in the range of 0% < A₁ ≤ 1%, the risk of internal short circuit of the battery cell can be reduced, thereby increasing the yield rate of the battery cell.

In some implementations, the second conductive layer is applied on a surface of the second current collector through a micro intaglio coating process. In this way, in the embodiments of the present application, by coating the second conductive layer on a surface of the second current collector through the micro intaglio coating process, uniform coating of the second current collector can be achieved, and the bonding force between the second conductive layer and the surface of the second current collector can be enhanced, thereby effectively alleviating the powder falling problem during the cutting process, reducing the risk of internal short circuit of the battery cell, and further increasing the yield rate of the battery cell.

In some implementations, a solid content A₂ of the first conductive layer satisfies: 1.5% ≤ A₂ ≤ 10%. In this way, in the embodiments of the present application, by controlling the solid content A₂ of the first conductive layer to be in the range of 1.5% ≤ A₂ ≤ 10%, the deposition amount of metal ions in the coated region of the electrode sheet can be improved, and the energy density of the battery cell can be increased.

In some implementations, before the step of performing cutting in the cutting region, the method further includes: disposing an insulating layer on a surface of the cutting region. In this way, in the embodiments of the present application, during the cutting process of the second current collector, by disposing the insulating layer on a surface of the cutting region and controlling the thickness of the second current collector in the cutting region to be less than the thickness of the second current collector in the coated region, the powder falling problem during the cutting process can be effectively alleviated, the risk of internal short circuit of the battery cell can be significantly reduced, and the yield rate of the battery cell can be increased.

In some implementations, the cutting region includes a bare foil region. In this way, in the embodiments of the present application, by disposing a bare foil region on a surface of the cutting region, to be specific, exposing the surface of the cutting region of the second current collector, the powder falling problem during the cutting process can be effectively alleviated, the risk of internal short circuit of the battery cell can be significantly reduced, and the yield rate of the battery cell can be increased.

### BRIEF DESCRIPTION OF DRAWINGS

To more clearly illustrate the technical solutions of the embodiments of the present application, the accompanying drawings to be used in the embodiments of the present application will be briefly introduced below. Obviously, the accompanying drawings described below are only some embodiments of the present application. For those of ordinary skill in the art, other drawings can also be obtained based on these drawings without creative effort.
FIG. 1 is a schematic structural diagram of a vehicle according to an embodiment of the present application.
FIG. 2 is a schematic structural diagram of a battery according to an embodiment of the present application.
FIG. 3 is a schematic structural diagram of a battery cell according to an embodiment of the present application.
FIG. 4 is a schematic cross-sectional view of an electrode sheet according to an embodiment of the present application.
FIG. 5 is a schematic cross-sectional view of an electrode sheet according to another embodiment of the present application.
FIG. 6 is a schematic cross-sectional view of an electrode sheet according to still another embodiment of the present application.
FIG. 7 is a schematic cross-sectional view of an electrode sheet according to still another embodiment of the present application.
FIG. 8 is a schematic cross-sectional view of an electrode sheet according to still another embodiment of the present application.
FIG. 9 is a schematic cross-sectional view of an electrode sheet according to still another embodiment of the present application.
FIG. 10 is a schematic cross-sectional view of an electrode sheet according to another embodiment of the present application.
FIG. 11 is a schematic cross-sectional view of an electrode sheet according to another embodiment of the present application.
FIG. 12 is a schematic partial cross-sectional view of an electrode assembly according to another embodiment of the present application.
FIG. 13 is a schematic flowchart of a preparation method for an electrode sheet according to an embodiment of the present application.
FIG. 14 is a schematic cross-sectional view of an electrode sheet to be cut according to an embodiment of the present application.
FIG. 15 is a schematic cross-sectional view of an electrode sheet to be cut according to another embodiment of the present application.
FIG. 16 is a schematic cross-sectional view of an electrode sheet to be cut according to another embodiment of the present application.
FIG. 17 is a schematic cross-sectional view of an electrode sheet to be cut according to another embodiment of the present application.
FIG. 18 is a schematic cross-sectional view of an electrode sheet to be cut according to another embodiment of the present application.
FIG. 19 is a schematic cross-sectional view of an electrode sheet to be cut according to another embodiment of the present application.

In the accompanying drawings, the drawings are not drawn to actual scale.

### DESCRIPTION OF EMBODIMENTS

The embodiments of the present application will be further described in detail below in conjunction with the accompanying drawings and embodiments. The detailed description of the following embodiments and the accompanying drawings are used to exemplarily illustrate the principles of the embodiments of the present application, but are not used to limit the scope of the embodiments of the present application, that is, the embodiments of the present application are not limited to the described embodiments.

Unless otherwise defined, all technical and scientific terms used in the embodiments of the present application have the same meaning as commonly understood by those skilled in the technical field to which the embodiments of the present application belong. The terms used in this document are only for the purpose of describing specific embodiments, and are not intended to limit the embodiments of the present application. The terms "including" and "having" and any variations thereof in the description and claims of the present application and the above description of the accompanying drawings are intended to cover non-exclusive inclusion.

In the description of the embodiments of the present application, technical terms such as "first", "second", and the like are only used to distinguish different objects, and should not be understood as indicating or implying relative importance or implicitly indicating the number, specific order or primary-secondary relationship of the indicated technical features. In the description of the embodiments of the present application, the meaning of "plurality" is two or more, unless otherwise clearly and specifically defined.

Reference to "an embodiment" in the present application means that a particular feature, structure, or characteristic described in conjunction with the embodiment can be included in at least one embodiment of the present application. The appearance of the phrase at various locations in the specification does not necessarily refer to the same embodiment, nor is it an independent or alternative embodiment that is mutually exclusive with other embodiments. Those skilled in the art explicitly and implicitly understand that the embodiments described in the present application can be combined with other embodiments.

In the description of the embodiments of the present application, the term "and/or" is merely an association describing associated objects, indicating that three relationships can exist, for example, A and/or B may indicate: A exists alone, A and B exist simultaneously, B exists alone. In addition, the character "/" in this document generally indicates that the associated objects before and after are in an "or" relationship.

It should be understood that in the description of the embodiments of the present application, the term "multiple" refers to two or more (including two), similarly, "multiple groups" refers to two or more groups (including two groups), and "plurality of sheets" refers to two or more sheets (including two sheets).

In the description of the embodiments of the present application, the orientation or positional relationship indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like is based on the orientation or positional relationship shown in the accompanying drawings, which is only for facilitating the description of the embodiments of the present application and simplifying the description, and does not indicate or imply that the referred device or element must have a specific orientation, be constructed and operated in a specific orientation, and therefore should not be construed as limiting the embodiments of the present application.

In the description of the embodiments of the present application, unless otherwise clearly specified and limited, technical terms such as "mounted", "connected", "coupled", "fixed", and the like should be broadly understood, for example, it can be a fixed connection, a detachable connection, or integrated; it can also be a mechanical connection or an electrical connection; it can be directly connected or indirectly connected through an intermediary, and it can be the internal communication or interaction relationship of two elements. For those of ordinary skill in the art, the specific meanings of the above terms in the embodiments of the present application can be understood according to specific circumstances.

Reference to "an embodiment" in the present application means that a particular feature, structure, or characteristic described in conjunction with the embodiment can be included in at least one embodiment of the present application. The appearance of the phrase at various locations in the specification does not necessarily refer to the same embodiment, nor is it an independent or alternative embodiment that is mutually exclusive with other embodiments. Those skilled in the art explicitly and implicitly understand that the embodiments described in the present application can be combined with other embodiments.

The battery mentioned in the embodiments of the present application may include one or more battery cells to provide a single physical module with higher voltage and capacity. When there are multiple battery cells, the multiple battery cells are connected in series, parallel, or series-parallel connection through a busbar component.

In some implementations, the battery may be a battery module. When there are multiple battery cells, the multiple battery cells are arranged and fixed to form a battery module.

In some implementations, the battery may be a battery pack, and the battery pack includes a box and battery cells, where the battery cells or battery modules are accommodated in the box.

In some implementations, the box may be part of a chassis structure of a vehicle. For example, a part of the box may become at least a part of a floor of the vehicle, or a part of the box may become at least a part of a cross beam and a longitudinal beam of the vehicle.

In some implementations, the battery may be an energy storage device. The energy storage device includes an energy storage container, an energy storage cabinet, and the like.

It should be understood that the battery cells in the embodiments of the present application include but are not limited to lithium-ion batteries, sodium-ion batteries, sodium-lithium-ion batteries, lithium metal batteries, sodium metal batteries, lithium-sulfur batteries, magnesium-ion batteries, nickel-metal hydride batteries, nickel-cadmium batteries, lead-acid batteries, and the like.

In some implementations, the battery cells in the embodiments of the present application may be metal batteries, specifically, the metal batteries may include lithium metal secondary batteries, sodium metal batteries, or magnesium metal batteries, and the like.

In some implementations, a battery cell generally includes an electrode assembly. The electrode assembly includes a positive electrode, a negative electrode, and a separator. During charging and discharging of the battery cell, active ions (such as lithium ions) shuttle between the positive electrode and the negative electrode for intercalation and deintercalation. The separator is disposed between the positive electrode and the negative electrode, and can play a role in preventing short circuit between the positive and negative electrodes, while allowing active ions to pass through.

In some implementations, the positive electrode may be a positive electrode sheet, and the positive electrode sheet may include a positive electrode current collector and a positive electrode active material disposed on at least one surface of the positive electrode current collector.

As an example, the positive electrode current collector has two opposite surfaces in its own thickness direction, and the positive electrode active material is disposed on any one or both of the two opposite surfaces of the positive electrode current collector.

As an example, the positive electrode current collector may adopt a metal foil or a composite current collector. For example, as the metal foil, aluminum or stainless steel with silver surface treatment, stainless steel, copper, aluminum, nickel, carbon paste electrode, carbon, nickel, titanium, or the like may be adopted. The composite current collector may include a polymer material base layer and a metal layer. The composite current collector may be formed by forming a metal material (aluminum, aluminum alloy, nickel, nickel alloy, titanium, titanium alloy, silver, silver alloy, and the like) on a polymer material substrate (such as a substrate of polypropylene, polyethylene terephthalate, polybutylene terephthalate, polystyrene, and polyethylene).

As an example, the positive electrode active material may include at least one of the following materials: lithium-containing phosphates, lithium transition metal oxides, and their respective modified compounds. In some implementations, other conventional materials that can be used as battery positive electrode active materials may also be used. These positive electrode active materials may be used alone or in combination of two or more. Examples of lithium-containing phosphates may include but are not limited to at least one of lithium iron phosphate (such as LiFePO4, which may also be abbreviated as LFP), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

As an example, the positive electrode active material may include at least one of sodium transition metal oxides, polyanion-type compounds, and Prussian blue-type compounds.

In some implementations, the chemical formula of the sodium transition metal oxide may satisfy NaxMO2, where M is one or more of Ti, V, Mn, Co, Ni, Fe, Zn, V, Zr, Ce, Cr, and Cu, 0 < x ≤ 1. As an example, x in NaxMO2 may be 0.1, 0.2, 0.3, 0.4, 0.5, 0.6, 0.7, 0.8, 0.9, or 1.

In some implementations, the sodium transition metal oxide may be a doped and modified sodium transition metal oxide, and the doping modification of the sodium transition metal oxide may include at least one of sodium site doping modification, oxygen site doping modification, transition metal site doping modification, and surface coating modification.

In some implementations, the positive electrode may adopt foam metal. The foam metal may be nickel foam, copper foam, aluminum foam, alloy foam, carbon foam, or the like. When the foam metal serves as the positive electrode, the surface of the foam metal may not be provided with a positive electrode active material, and certainly, a positive electrode active material may also be provided. As an example, a lithium source material, potassium metal, or sodium metal may also be filled and/or deposited in the foam metal, and the lithium source material is lithium metal and/or lithium-rich material.

In some implementations, the negative electrode may be a negative electrode sheet, and the negative electrode sheet may include a negative electrode current collector.

As an example, the negative electrode current collector may adopt a metal foil, foam metal, or composite current collector. For example, as the metal foil, aluminum or stainless steel with silver surface treatment, stainless steel, copper, aluminum, nickel, carbon paste electrode, carbon, nickel, titanium, or the like may be adopted. The composite current collector may include a polymer material base layer and a metal layer. The foam metal may be nickel foam, copper foam, aluminum foam, alloy foam, carbon foam, or the like. The composite current collector may be formed by forming a metal material (copper, copper alloy, nickel, nickel alloy, titanium, titanium alloy, silver, silver alloy, and the like) on a polymer material substrate (such as a substrate of polypropylene, polyethylene terephthalate, polybutylene terephthalate, polystyrene, and polyethylene).

In some implementations, the battery cells in the embodiments of the present application may be anode-free metal batteries.

In some implementations, the battery cells in the embodiments of the present application may be anode-free sodium secondary batteries.

An anode-free sodium secondary battery refers to a battery cell configured without actively providing a negative electrode active material layer on the negative electrode side during the manufacturing process of the battery cell, for example, during the manufacturing process of the battery cell, no sodium metal or carbon-based active material layer is disposed at the negative electrode through coating or deposition processes to form a negative electrode active material layer. During the first charge, sodium ions obtain electrons on the anode side to deposit and form a sodium metal phase on the current collector surface; during discharge, the metal sodium can be converted to sodium ions and return to the positive electrode, achieving cyclic charging and discharging. Compared with other sodium secondary batteries, the anode-free sodium secondary battery cell can obtain higher energy density because there is no negative electrode active material layer.

In some implementations, in order to improve the performance of the battery cell, some functional coating layers, such as carbon-based materials, metal oxides, and alloys, may be provided on the negative electrode side of the anode-free sodium secondary battery to improve the conductivity of the negative electrode current collector and improve the uniformity of deposited sodium metal.

In some implementations, a CB value of the anode-free sodium secondary battery is less than or equal to 0.1.

Specifically, the CB value is the unit area capacity of the negative electrode sheet divided by the unit area capacity of the positive electrode sheet in the secondary battery. Since the anode-free battery does not include or only includes a small amount of functional coating layers, the unit area capacity of the negative electrode sheet is relatively small, and the CB value of the secondary battery is less than or equal to 0.1.

In some implementations, the material of the positive electrode current collector may be aluminum, and the material of the negative electrode current collector may be copper.

In some implementations, the electrode assembly further includes a separator, where the separator is disposed between the positive electrode and the negative electrode.

In some implementations, the separator is a separator film. The embodiments of the present application have no particular limitation on the type of the separator film, and any well-known porous structure separator film with good chemical stability and mechanical stability may be selected.

As an example, the main material of the separator film may be selected from at least one of glass fiber, non-woven fabric, polyethylene, polypropylene, polyvinylidene fluoride, and ceramics.

In some implementations, the separator is a solid electrolyte. The solid electrolyte is disposed between the positive electrode and the negative electrode, and plays a role in transmitting ions and isolating the positive and negative electrodes at the same time.

In some implementations, the battery cell further includes an electrolyte, where the electrolyte plays a role in conducting ions between the positive and negative electrodes. The embodiments of the present application have no specific limitation on the type of the electrolyte, which can be selected according to needs. The electrolyte may be liquid, gel, or solid.

In some implementations, the electrode assembly may be a wound structure. The positive electrode sheet and the negative electrode sheet are wound into a wound structure.

In some implementations, the electrode assembly is a laminated structure. As an example, multiple positive electrode sheets and multiple negative electrode sheets may be disposed respectively, and the multiple positive electrode sheets and the multiple negative electrode sheets are alternately laminated.

As an example, multiple positive electrode sheets may be disposed, and the negative electrode sheet is folded to form multiple folded sections that are laminated, with one positive electrode sheet sandwiched between adjacent folded sections.

As an example, both the positive electrode sheet and the negative electrode sheet are folded to form multiple folded sections that are laminated.

As an example, multiple separators may be disposed between any adjacent positive electrode sheets or negative electrode sheets respectively.

As an example, the separator may be continuously disposed between any adjacent positive electrode sheets or negative electrode sheets by folding or winding.

In some implementations, the shape of the electrode assembly may be cylindrical, flat, multi-prism, or the like.

In some implementations, the electrode assembly is provided with tabs, and the tabs can lead current out from the electrode assembly. The tabs include positive electrode tabs and negative electrode tabs.

In some implementations, the battery cell may include a housing. The housing is used for encapsulating components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a pouch battery cell, or a battery cell of other shapes, where the prismatic battery cell includes a square shell battery cell, a blade-shaped battery cell, and a multi-prism battery, and the multi-prism battery is, for example, a hexagonal prism battery, and the like.

It should be understood that in the embodiments of the present application, an energy storage device is a device that stores energy, and usually can accommodate one or more energy storage elements, where the energy storage elements may be, for example, batteries. A battery may also be called a power box, which includes a box and one or more battery cells encapsulated by the box. For example, the battery cells may include but are not limited to: lithium-ion secondary batteries, lithium-ion primary batteries, lithium-sulfur batteries, sodium-lithium-ion batteries, sodium-ion batteries, or magnesium-ion batteries. The battery cells may be cylindrical, flat, rectangular prism, or other shapes, and the like.

In some implementations, functional components may also be disposed in the energy storage device to manage or assist the operation of the multiple energy storage elements. For example, a thermal management component may be disposed in the energy storage device, and the thermal management component includes but is not limited to an air conditioning component, a fan component, a water-cooling pipeline, and the like, which may be used for thermal management of the interior of the energy storage device to adjust the temperature inside the energy storage device. As another example, a control box may be disposed in the energy storage device to monitor and control various states of the energy storage device.

To meet different power needs, the battery in the embodiments of the present application may include multiple battery cells, where the multiple battery cells may be connected in series, parallel, or series-parallel connection, and the series-parallel connection refers to a mixture of series and parallel. Optionally, the multiple battery cells may first be connected in series, parallel, or series-parallel connection to form a battery module, and then multiple battery modules are connected in series, parallel, or series-parallel connection to form a battery. That is, the multiple battery cells may directly form a battery, or may first form a battery module, and then the battery module forms a battery. The battery is further installed in the electric device to provide electrical energy to the electric device.

At present, the design of electrode sheets in battery cells is crucial to the yield rate and service performance of the battery cells. For alkali metal batteries in the art, it is usually an anode-free design, that is, only a thin conductive coating layer is coated on the negative electrode side. Due to the thin thickness of the electrode sheet, existing cold pressing equipment is difficult to fully press the electrode sheet, resulting in poor bonding force between the conductive coating layer and the current collector. In subsequent slitting and die-cutting processes, there may be powder falling or ablation in the cutting region, which is prone to generate dust and burrs, which may lead to the risk of internal short circuit of the battery cell due to overlapping of the positive electrode sheet and the negative electrode sheet, affecting the yield rate of the battery cell.

Specifically, in the battery manufacturing process, slitting refers to cutting the electrode sheet to be cut into narrower strip-shaped sheets along its length direction. This is usually achieved through dedicated equipment and tools, such as slitting machines and cutting knives. For slitting, the electrode sheet can be cut into strips of different widths according to requirements to meet different application needs. Die-cutting refers to forming tabs of specific shapes and specifications on the electrode sheet to be cut through a forming die or laser shearing. It should be understood that in the manufacturing process of the electrode sheet, the slitting process and the die-cutting process may be performed simultaneously or sequentially.

In view of this, embodiments of the present application provide an electrode sheet, including: a first current collector and a first conductive layer, where the first current collector includes a first body and a tab region connected to an edge of the first body, the first body includes a coated region and an edge region, and the first conductive layer is disposed on a surface of the coated region; where a thickness of the electrode sheet in the edge region is less than a thickness of the electrode sheet in the coated region. In the embodiments of the present application, during the slitting and/or die-cutting process of the electrode sheet to be cut, since an edge of the edge region serves as a cutting edge, and the thickness of the electrode sheet in the edge region is less than the thickness of the electrode sheet in the coated region, the powder falling problem of the electrode sheet to be cut during the cutting process can be effectively alleviated, thereby reducing the risk of internal short circuit of the battery cell caused by overlapping of the positive electrode sheet and the negative electrode sheet, and further increasing the yield rate of the battery cell.

The technical solutions described in the embodiments of the present application are all applicable to various electric devices using batteries.

The electric device may be vehicles, mobile phones, portable devices, notebook computers, ships, aerospace vehicles, electric toys, electric tools, and the like. The vehicles can be fuel vehicles, gas vehicles, or new energy vehicles, and the new energy vehicles may be battery electric vehicles, hybrid electric vehicles, or extended-range electric vehicles, and the like; aerospace vehicles include airplanes, rockets, space shuttles, spaceships, and the like; electric toys include fixed or mobile electric toys, such as game consoles, electric vehicle toys, electric ship toys, and electric airplane toys; and electric tools include metal cutting tools, grinding electric tools, assembly electric tools, and railway electric tools, such as electric drills, electric grinders, electric wrenches, electric screwdrivers, electric hammers, impact drills, concrete vibrators, and electric planers.

It should be understood that the technical solutions described in the embodiments of the present application are not solely limited to the electric devices described above, but can also be applied to all devices using batteries. The following embodiments are described in detail by taking the electric device as a vehicle for simplicity.

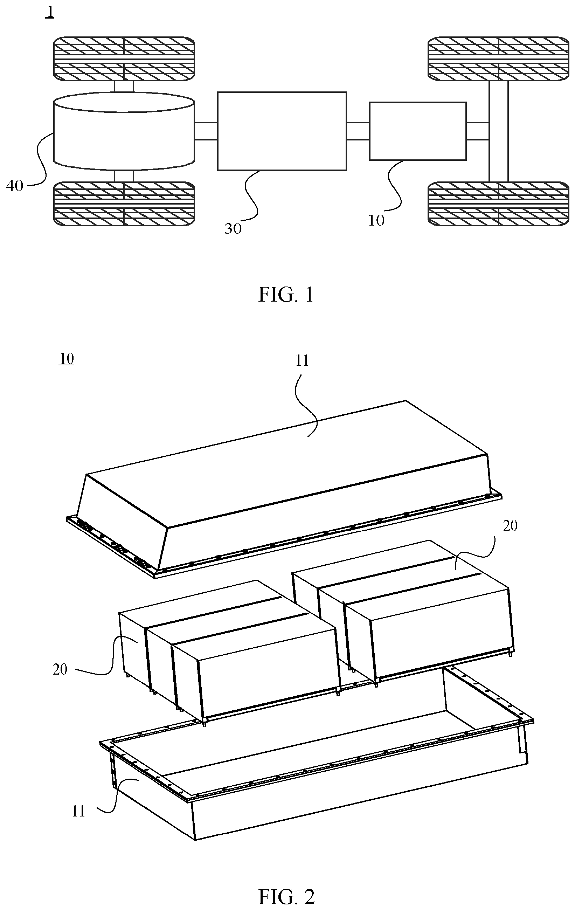

For example, as shown in FIG. 1, it is a schematic structural diagram of a vehicle 1 according to an embodiment of the present application. The vehicle 1 can be a fuel vehicle, a gas vehicle, or a new energy vehicle, and the new energy vehicle may be a battery electric vehicle, a hybrid electric vehicle, an extended-range electric vehicle, or the like. A motor 40, a controller 30, and a battery 10 may be provided inside the vehicle 1, and the controller 30 is configured to control the power supply of the battery 10 to the motor 40. For example, the battery 10 may be provided at the bottom, front, or rear of the vehicle 1. The battery 10 may be used for power supply of the vehicle 1, for example, the battery 10 may serve as an operating power source of the vehicle 1, applied to the circuit system of the vehicle 1, such as for starting, navigation, and operational power needs during operation of the vehicle 1. In another implementation of the present application, the battery 10 may not only serve as the operating power source of the vehicle 1, but also as a driving power source of the vehicle 1, replacing or partially replacing fuel or natural gas to provide driving power for the vehicle 1.

To meet different power usage needs, the battery 10 in the embodiments of the present application may be a battery cell group or a battery pack. The battery 10 may include at least one battery cell group, the battery cell group including multiple battery cells, where the multiple battery cells can be electrically connected in series, parallel, or series-parallel connection to form the battery 10, where the series-parallel connection refers to a mixture of series and parallel. The battery 10 can also be called a battery pack. For example, multiple battery cells may first be connected in series, parallel, or series-parallel connection to form a battery module, and then multiple battery modules are connected in series, parallel, or series-parallel connection to form the battery 10. That is, the multiple battery cells may directly form a battery 10, or may first form a battery module, and then the battery module forms a battery 10.

In some implementations, the battery 10 may include multiple battery cells. For example, as shown in FIG. 2, it is a schematic structural diagram of a battery 10 according to an embodiment of the present application. The battery 10 can include multiple battery cells 20. The battery 10 may further include a box 11, where the interior of the box 11 is a hollow structure, and the multiple battery cells 20 are accommodated in the box 11. For example, the multiple battery cells 20 are combined in parallel, series, or series-parallel connection and then placed in the box 11.

In some implementations, the battery 10 may further include other structures, which will not be described in detail herein. For example, the battery 10 may further include a busbar component, and the busbar component is used to achieve electrical connection between the multiple battery cells 20, such as parallel, series, or series-parallel connection. Specifically, the busbar component can achieve electrical connection between the battery cells 20 by connecting to the electrode terminals of the battery cells 20. Further, the busbar component may be fixed to the electrode terminals of the battery cells 20 by welding. The electrical energy of the multiple battery cells 20 may be further led out through a conductive mechanism extending through the box. Optionally, the conductive mechanism may alternatively belong to the busbar component.

In the embodiments of the present application, according to different power needs, the number of the battery cells 20 may be set to any value. The multiple battery cells 20 may be connected in series, parallel, or series-parallel connection to achieve greater capacity or power. Since the number of battery cells 20 included in each battery 10 may be large, for ease of installation, the battery cells 20 can be grouped, and each group of battery cells 20 forms a battery module. The number of battery cells 20 included in the battery module is not limited and may be set according to needs. The battery 10 may include multiple battery modules, and these battery modules may be connected in series, parallel, or series-parallel connection.

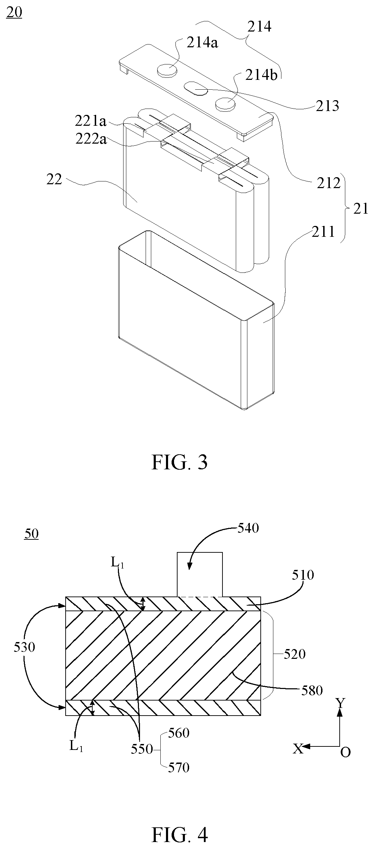

As shown in FIG. 3, it is a schematic structural diagram of a battery cell 20 according to an embodiment of the present application. The battery cell 20 includes one or more electrode assemblies 22, a housing 211, and a cover plate 212. The housing 211 and the cover plate 212 form an outer shell or battery case 21. The wall of the housing 211 and the wall of the cover plate 212 are both called the wall of the battery cell 20, where for a rectangular battery cell 20, the wall of the housing 211 includes a bottom wall and four side walls. The housing 211 is determined according to the shape of one or more electrode assemblies 22 combined, for example, the housing 211 may be a hollow rectangular body, square body, or cylinder, and one surface of the housing 211 has an opening such that one or more electrode assemblies 22 may be placed in the housing 211. For example, when the housing 211 is a hollow rectangular body or square body, one plane of the housing 211 is an opening surface, that is, the plane does not have a wall such that the inside and outside of the housing 211 communicate. When the housing 211 may be a hollow cylinder, the end surface of the housing 211 is an opening surface, that is, the end surface does not have a wall such that the inside and outside of the housing 211 communicate. The cover plate 212 covers the opening and is connected to the housing 211 to form a closed cavity for placing the electrode assembly 22. The housing 211 is filled with an electrolyte, such as an electrolyte solution.

The battery cell 20 may further include two electrode terminals 214, where the two electrode terminals 214 may be disposed on the cover plate 212. The cover plate 212 is generally in a flat plate shape, the two electrode terminals 214 are fixed on the flat surface of the cover plate 212, and the two electrode terminals 214 are a positive electrode terminal 214a and a negative electrode terminal 214b. Each electrode terminal 214 is correspondingly provided with a connecting member, or also called a current collecting member, located between the cover plate 212 and the electrode assembly 22, for electrically connecting the electrode assembly 22 and the electrode terminal 214.

As shown in FIG. 3, each electrode assembly 22 has a first tab 221a and a second tab 222a. The polarities of the first tab 221a and the second tab 222a are opposite. For example, when the first tab 221a is a positive electrode tab, the second tab 222a is a negative electrode tab.

In the battery cell 20, according to actual usage needs, the electrode assembly 22 can be provided as a single one or multiple ones. As shown in FIG. 3, two independent electrode assemblies 22 are provided in the battery cell 20.

A pressure relief mechanism 213 may alternatively be provided on the battery cell 20. The pressure relief mechanism 213 is configured to actuate to release internal pressure or dissipate internal temperature when the internal pressure or dissipate internal temperature of the battery cell 20 reaches a threshold.

The pressure relief mechanism 213 can be various possible pressure relief structures. For example, the pressure relief mechanism 213 may be a temperature-sensitive pressure relief mechanism, and the temperature-sensitive pressure relief mechanism is configured to be able to melt when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be able to rupture when the internal air pressure of the battery cell 20 provided with the pressure relief mechanism 213 reaches a threshold.

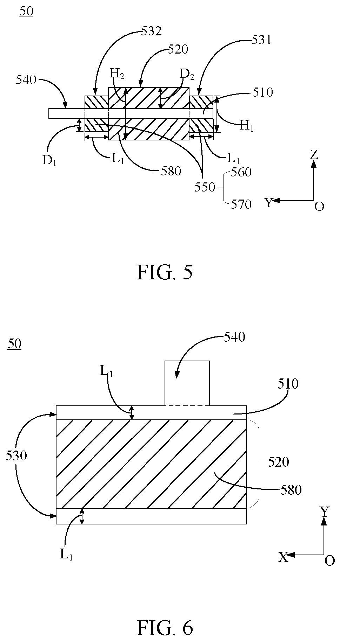

FIG. 4 is a schematic cross-sectional view of an electrode sheet 50 according to an embodiment of the present application, and FIG. 5 is a schematic cross-sectional view of an electrode sheet 50 according to another embodiment of the present application, where FIG. 4 and FIG. 5 can be understood as schematic cross-sectional views of the same electrode sheet 50 in different directions. Exemplarily, FIG. 4 may be a schematic cross-sectional view of the electrode sheet 50 perpendicular to the thickness direction of the electrode sheet 50, and FIG. 5 may be a schematic cross-sectional view of the electrode sheet 50 perpendicular to the length direction of the electrode sheet 50.

It should be understood that in the embodiments of the present application, for ease of description, as shown in FIG. 4 and FIG. 5, direction X may be the length direction of the electrode sheet 50, and direction X is perpendicular to direction Y and direction Z; direction Y may be the width direction of the electrode sheet 50, and direction Y is perpendicular to direction X and direction Z; and direction Z may be the height direction of the electrode sheet 50, direction Z is perpendicular to direction X and direction Y, and direction Z may also refer to the thickness direction of the electrode sheet 50.

In some implementations, as shown in FIG. 4 and FIG. 5, the electrode sheet 50 includes: a first current collector 510 and a first conductive layer 580, where the first current collector 510 includes a first body and a tab region 540 connected to an edge of the first body, the first body includes a coated region 520 and an edge region 530, and the first conductive layer 580 is disposed on a surface of the coated region 520; where a thickness H₁ of the electrode sheet 50 in the edge region 530 is less than a thickness H₂ of the electrode sheet 50 in the coated region 520.

It should be understood that in the embodiments of the present application, the first conductive layer 580 being disposed on a surface of the coated region 520 can mean that the first conductive layer 580 may be disposed on at least one surface of two surfaces of the coated region 520 perpendicular to the thickness direction of the coated region 520.

It should also be understood that in the embodiments of the present application, the rectangular electrode sheet 50 shown in FIG. 4 and FIG. 5 above is only an example, and the shape of the electrode sheet 50 includes but is not limited to rectangle, square, parallelogram, and polygon.

It should also be understood that in the embodiments of the present application, the first current collector 510 may be a negative electrode current collector or a positive electrode current collector. When the first current collector 510 is a negative electrode current collector, the negative electrode current collector may be a metal foil, foam metal, or composite current collector; when the first current collector 510 is a positive electrode current collector, the positive electrode current collector may be a metal foil or composite current collector.

It should also be understood that in the embodiments of the present application, the edge region 530 may be understood as a region disposed at an edge of the first body of the first current collector 510. In some implementations, the edge region 530 may be disposed in a region of the first body close to the tab region 540. In some other implementations, the edge region 530 may also be disposed in a region of the first body away from the tab region 540.

It should also be understood that in the embodiments of the present application, the thickness H₁ of the electrode sheet 50 in the edge region 530 being less than the thickness H₂ of the electrode sheet 50 in the coated region 520 may mean that the average thickness H₁ of the electrode sheet 50 in the edge region 530 is less than the average thickness H₂ of the electrode sheet 50 in the coated region 520, or may mean that the maximum thickness H₁ of the electrode sheet 50 in the edge region 530 is less than the maximum thickness H₂ of the electrode sheet 50 in the coated region 520.

In the embodiments of the present application, since the thickness H₁ of the electrode sheet 50 in the edge region 530 is less than the thickness H₂ of the electrode sheet 50 in the coated region 520, an edge of the edge region 530 serves as a cutting edge. During the slitting and/or die-cutting process of the electrode sheet to be cut, the powder falling problem of the electrode sheet to be cut during the cutting process can be effectively alleviated, thereby reducing the risk of internal short circuit of the battery cell 20 caused by overlapping of the positive electrode sheet 502 and the negative electrode sheet 501, and further increasing the yield rate of the battery cell 20.

In some implementations, as shown in FIG. 4 and FIG. 5, a dimension L₁ of the edge region 530 in a first direction satisfies: 0 mm < L₁ ≤ 3 mm, where the first direction is perpendicular to the thickness direction of the electrode sheet 50. Exemplarily, in the embodiments of the present application, the first direction may be direction Y or direction X.

It should be understood that in the embodiments of the present application, as shown in FIG. 4 and FIG. 5, along direction Y, the electrode sheet 50 may be provided with two edge regions 530. Exemplarily, the edge region 530 of the first body of the first current collector 510 away from the tab region 540 may be a first edge region 531, and the edge region 530 of the first body of the first current collector 510 close to the tab region 540 may be a second edge region 532. The dimension of the first edge region 531 in direction Y may be the same as or different from the dimension of the second edge region 532 in direction Y.

Exemplarily, the dimension L₁ of the edge region 530 in the first direction in the embodiments of the present application may be: 0.1 mm, 0.2 mm, 0.4 mm, 0.6 mm, 0.8 mm, 1.0 mm, 1.2 mm, 1.4 mm, 1.6 mm, 1.8 mm, 2.0 mm, 2.2 mm, 2.4 mm, 2.6 mm, 2.8 mm, 3.0 mm, or a range obtained by any combination of the above two values. In some other implementations, the dimension L₁ of the edge region 530 in the first direction in the embodiments of the present application may be: 0.5 mm ≤ L₁ ≤ 1 mm.

In the embodiments of the present application, by controlling the dimension L₁ of the edge region 530 in the first direction to be in the range of 0 mm < L₁ ≤ 3 mm, with the first direction perpendicular to the thickness direction of the electrode sheet 50, the yield rate of the battery cell 20 and the energy density of the battery cell 20 can be balanced, thereby improving the service performance of the battery 10.

In some implementations, as shown in FIG. 4 and FIG. 5, the electrode sheet 50 further includes a first layer 550 disposed on a surface of the edge region 530, where a thickness D₁ of the first layer 550 is less than a thickness D₂ of the first conductive layer 580. It should be understood that in the embodiments of the present application, the electrode sheet 50 further including a first layer 550 disposed on a surface of the edge region 530 can mean that the first layer 550 may be disposed on at least one surface of two surfaces of the edge region 530 perpendicular to the thickness direction of the edge region 530.

It should be understood that in the embodiments of the present application, the thickness D₁ of the first layer 550 being less than the thickness D₂ of the first conductive layer 580 means that the average thickness D₁ of the first layer 550 is less than the average thickness D₂ of the first conductive layer 580.

In this way, in the embodiments of the present application, during the slitting and/or die-cutting process of the electrode sheet to be cut, since an edge of the edge region 530 serves as a cutting edge, and the thickness D₁ of the first layer 550 is less than the thickness D₂ of the first conductive layer 580, the powder falling problem of the electrode sheet to be cut during the cutting process can be effectively alleviated, thereby reducing the risk of internal short circuit of the battery cell 20 caused by overlapping of the positive electrode sheet 502 and the negative electrode sheet 501, and further increasing the yield rate of the battery cell 20.

In some implementations, as shown in FIG. 5, the thickness D₁ of the first layer 550 satisfies: 0 mm < D₁ ≤ 1 mm.

Exemplarily, the thickness D₁ of the first layer 550 in the embodiments of the present application may be: 0.05 mm, 0.1 mm, 0.15 mm, 0.20 mm, 0.25 mm, 0.30 mm, 0.35 mm, 0.40 mm, 0.45 mm, 0.50 mm, 0.55 mm, 0.60 mm, 0.65 mm, 0.70 mm, 0.75 mm, 0.80 mm, 0.85 mm, 0.90 mm, 0.95 mm, 1 mm, or a range obtained by any combination of the above two values. In some other implementations, the thickness D₁ of the first layer 550 in the embodiments of the present application may be: 0.25 mm ≤ D₁ ≤ 0.75 mm.

In the embodiments of the present application, by controlling the thickness D₁ of the first layer 550 to be in the range of 0 mm < D₁ ≤ 1 mm, disposing the first layer 550 on a surface of the edge region 530 of the electrode sheet 50, and controlling the thickness D₁ of the first layer 550 to be less than the thickness D₂ of the first conductive layer 580, compared with the prior art, the risk of internal short circuit of the battery cell 20 can be reduced, thereby increasing the yield rate of the battery cell 20.

In some implementations, as shown in FIG. 4 and FIG. 5, the first layer 550 includes a second conductive layer 560.

It should be understood that in the embodiments of the present application, the thickness of the second conductive layer 560 is less than the thickness of the first conductive layer 580, and the second conductive layer 560 may be disposed on at least one surface of two surfaces of the edge region 530 perpendicular to the thickness direction of the edge region 530.

In this way, in the embodiments of the present application, by disposing the second conductive layer 560 on a surface of the edge region 530, the deposition area of metal ions on the electrode sheet 50 can be increased, and the electrochemical performance of the battery cell 20 can be improved, thereby improving the service performance of the battery 10. At the same time, during the slitting or die-cutting process of the electrode sheet to be cut, since an edge of the edge region 530 serves as a cutting edge, and the thickness of the second conductive layer 560 is less than the thickness of the first conductive layer 580, the powder falling phenomenon of the conductive layer during the slitting process or the ablation phenomenon of the electrode sheet 50 at the cutting position after die-cutting can be alleviated, thereby reducing the risk of internal short circuit of the battery cell 20, and further increasing the yield rate of the battery cell 20.

In some implementations, a material of the second conductive layer 560 includes at least one of the following materials: carbon nanotubes, graphene, conductive graphite, and conductive carbon. In this way, in the embodiments of the present application, by selecting the material of the second conductive layer 560 from at least one of the following materials: carbon nanotubes, graphene, conductive graphite, and conductive carbon, during the slitting or die-cutting process of the electrode sheet to be cut, since an edge of the edge region 530 serves as a cutting edge, and the thickness of the second conductive layer 560 is less than the thickness of the first conductive layer 580, compared with cutting the electrode sheet in the coated region 520 provided with the first conductive layer 580, the powder falling phenomenon of the conductive layer during the cutting process can be alleviated, thereby reducing the risk of internal short circuit of the battery cell 20, and further increasing the yield rate of the battery cell 20.

In some implementations, as shown in FIG. 4 and FIG. 5, the first layer 550 includes an insulating layer 570.

It should be understood that in the embodiments of the present application, the thickness of the insulating layer 570 is less than the thickness of the first conductive layer 580, and the insulating layer 570 may be disposed on at least one surface of two surfaces of the edge region 530 perpendicular to the thickness direction of the edge region 530.

In this way, in the embodiments of the present application, during the slitting or die-cutting process of the electrode sheet to be cut, by disposing the insulating layer 570 on a surface of the edge region 530 with the thickness H₁ of the electrode sheet 50 in the edge region 530 less than the thickness H₂ of the electrode sheet 50 in the coated region 520, the powder falling problem during the cutting process can be effectively alleviated, the risk of internal short circuit of the battery cell 20 can be significantly reduced, and the yield rate of the battery cell 20 can be increased.

In some implementations, a material of the insulating layer 570 includes at least one of the following materials: boehmite, polyvinylidene fluoride, and ethylene propylene diene monomer rubber. In this way, in the embodiments of the present application, by selecting the material of the insulating layer 570 from at least one of the following materials: boehmite, polyvinylidene fluoride, and ethylene propylene diene monomer rubber, and during the cutting process of the electrode sheet to be cut, by disposing the insulating layer 570 on a surface of the edge region 530 and controlling the thickness H₁ of the electrode sheet 50 in the edge region 530 to be less than the thickness H₂ of the electrode sheet 50 in the coated region 520, the powder falling problem during the cutting process can be effectively alleviated, the risk of internal short circuit of the battery cell 20 can be significantly reduced, and the yield rate of the battery cell 20 can be increased.

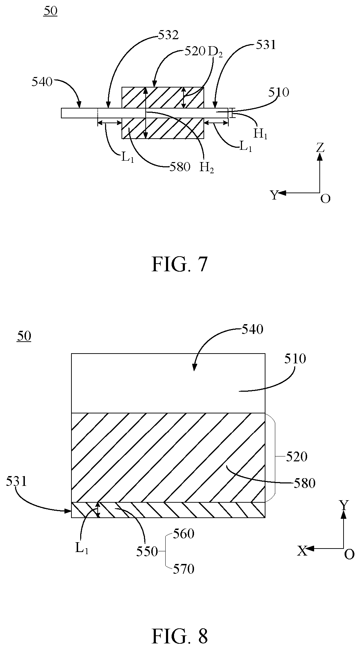

FIG. 6 is a schematic cross-sectional view of an electrode sheet 50 according to another embodiment of the present application, and FIG. 7 is a schematic cross-sectional view of an electrode sheet 50 according to another embodiment of the present application. For example, FIG. 6 and FIG. 7 can be understood as schematic cross-sectional views of the same electrode sheet 50 in different directions. FIG. 6 may be a schematic cross-sectional view of the electrode sheet 50 perpendicular to the thickness direction of the electrode sheet 50, and FIG. 7 may be a schematic cross-sectional view of the electrode sheet 50 perpendicular to the length direction of the electrode sheet 50.

In some implementations, as shown in FIG. 6 and FIG. 7, the edge region 530 includes a bare foil region. In this way, in the embodiments of the present application, by disposing a bare foil region on a surface of the edge region 530, to be specific, by exposing the surface of the edge region 530 of the electrode sheet 50, the powder falling problem during the cutting process can be effectively alleviated, the risk of internal short circuit of the battery cell 20 can be significantly reduced, and the yield rate of the battery cell 20 can be increased.

In some implementations, as shown in FIG. 4 to FIG. 7, the thickness D₂ of the first conductive layer 580 satisfies: 2 mm ≤ D₂ ≤ 20 mm.

Exemplarily, the thickness D₂ of the first conductive layer 580 may be: 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, or a range obtained by any combination of the above two values. In some other implementations, the thickness D₂ of the first conductive layer 580 in the embodiments of the present application may alternatively be: 4 mm ≤ D₂ ≤ 10 mm.

In this way, in the embodiments of the present application, by controlling the thickness D₂ of the first conductive layer 580 to be in the range of 2 mm ≤ D₂ ≤ 20 mm, the uniform distribution of the first conductive layer 580 on the first current collector 510 can be controlled, to balance the energy density of the battery cell 20 and the yield rate of the battery cell 20.

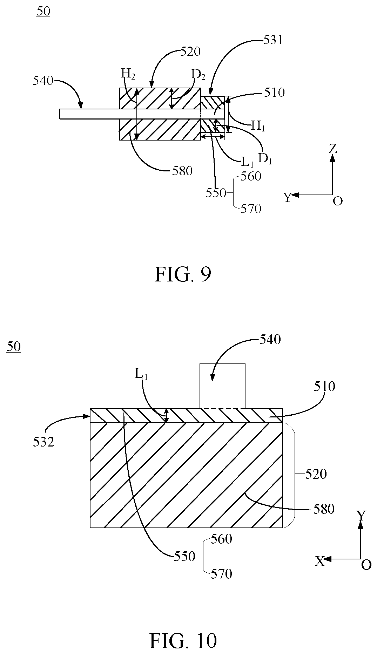

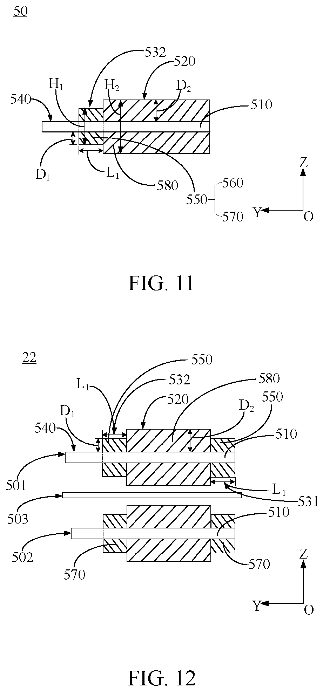

FIG. 8 is a schematic cross-sectional view of an electrode sheet 50 according to another embodiment of the present application, and FIG. 9 is a schematic cross-sectional view of an electrode sheet 50 according to another embodiment of the present application. For example, FIG. 8 and FIG. 9 can be understood as schematic cross-sectional views of the same electrode sheet 50 in different directions. FIG. 8 may be a schematic cross-sectional view of the electrode sheet 50 perpendicular to the thickness direction of the electrode sheet 50, and FIG. 9 may be a schematic cross-sectional view of the electrode sheet 50 perpendicular to the length direction of the electrode sheet 50. FIG. 10 is a schematic cross-sectional view of an electrode sheet 50 according to another embodiment of the present application, and FIG. 11 is a schematic cross-sectional view of an electrode sheet 50 according to another embodiment of the present application. For example, FIG. 10 and FIG. 11 can be understood as schematic cross-sectional views of the same electrode sheet 50 in different directions. FIG. 10 may be a schematic cross-sectional view of the electrode sheet 50 perpendicular to the thickness direction of the electrode sheet 50, and FIG. 11 may be a schematic cross-sectional view of the electrode sheet 50 perpendicular to the length direction of the electrode sheet 50.

In some implementations, as shown in FIG. 4 to FIG. 11, the edge region 530 includes a first edge region 531, where the first edge region 531 is connected to a side of the coated region 520 away from the tab region 540, and/or the edge region 530 includes a second edge region 532, where the second edge region 532 is connected between the tab region 540 and the coated region 520.

Exemplarily, as shown in FIG. 8 and FIG. 9, the first body of the first current collector 510 of the electrode sheet 50 includes one edge region 530, where the edge region 530 may be a first edge region 531, and the first edge region 531 is connected to a side of the coated region 520 away from the tab region 540. As another example, as shown in FIG. 10 and FIG. 11, the first body of the first current collector 510 of the electrode sheet 50 includes one edge region 530, where the edge region 530 may be a second edge region 532, and the second edge region 532 is connected between the tab region 540 and the coated region 520.

In the embodiments of the present application, the edge region 530 includes the first edge region 531 and/or the second edge region 532, where the first edge region 531 is connected to a side of the coated region 520 away from the tab region 540, and the second edge region 532 is connected between the tab region 540 and the coated region 520. In this way, during the cutting process of the electrode sheet to be cut, an edge of the edge region 530 serves as a cutting edge, and the thickness H₁ of the electrode sheet 50 in the edge region 530 is less than the thickness H₂ of the electrode sheet 50 in the coated region 520, which can effectively alleviate the powder falling problem of the electrode sheet to be cut during the cutting process, thereby reducing the risk of internal short circuit of the battery cell 20 caused by overlapping of the positive electrode sheet 502 and the negative electrode sheet 501, and further increasing the yield rate of the battery cell 20.

The embodiments of the present application further also provide a battery cell, including an electrode assembly 22, where the electrode assembly includes the electrode sheet 50 in the above embodiments. Specifically, the battery cell may be the battery cell 20 shown in FIG. 3 above.

FIG. 12 shows a schematic partial cross-sectional view of an electrode assembly 22 according to an embodiment of the present application. As shown in FIG. 12, the electrode assembly 22 includes a negative electrode sheet 501, a positive electrode sheet 502, and a separator 503, where the separator 503 is disposed between the negative electrode sheet 501 and the positive electrode sheet 502.

In some implementations, as shown in FIG. 12, the electrode sheet 50 is a negative electrode sheet 501, the electrode assembly 22 further includes a positive electrode sheet 502, and a position of a region of the positive electrode sheet 502 corresponding to the edge region of the negative electrode sheet 501 is provided with an insulating layer 570.

It should be understood that in the embodiments of the present application, the insulating layer 570 disposed in the region of the positive electrode sheet 502 corresponding to the edge region 530 of the negative electrode sheet 501 may be named a first region, and a dimension of the first region in direction Y may be less than or equal to a dimension of the edge region 530 on the negative electrode sheet 501 in direction Y.

In the embodiments of the present application, the electrode sheet 50 serves as a negative electrode sheet 501, and the electrode assembly 22 further includes a positive electrode sheet 502. In this way, by disposing an insulating layer 570 at a position of a region of the positive electrode sheet 502 corresponding to the edge region 530 of the negative electrode sheet 501, when metal ions are precipitated on a surface of the edge region 530 of the negative electrode sheet 501, due to the arrangement of the insulating layer 570, the risk of internal short circuit of the battery cell 20 caused by overlapping of the positive electrode sheet 502 and the negative electrode sheet 501 can be effectively reduced, thereby increasing the yield rate of the battery cell 20.

In some implementations, the battery cell 20 is an alkali metal battery cell.

The embodiments of the present application further provide a battery, including the battery cell 20 in the above embodiments. Specifically, the battery may be the battery 10 shown in FIG. 2 above.

The embodiments of the present application further provide an electric device, including the battery 10 in the above embodiments, where the battery 10 is configured to provide electrical energy to the electric device. Specifically, the electric device may be the vehicle 1 shown in FIG. 1 above, and may alternatively be any device using the battery 10.

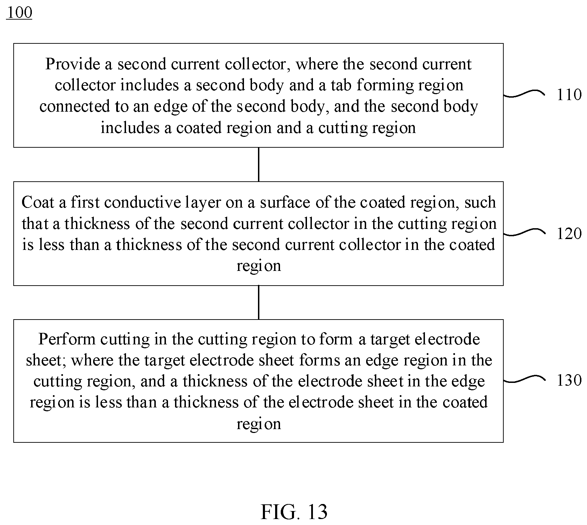

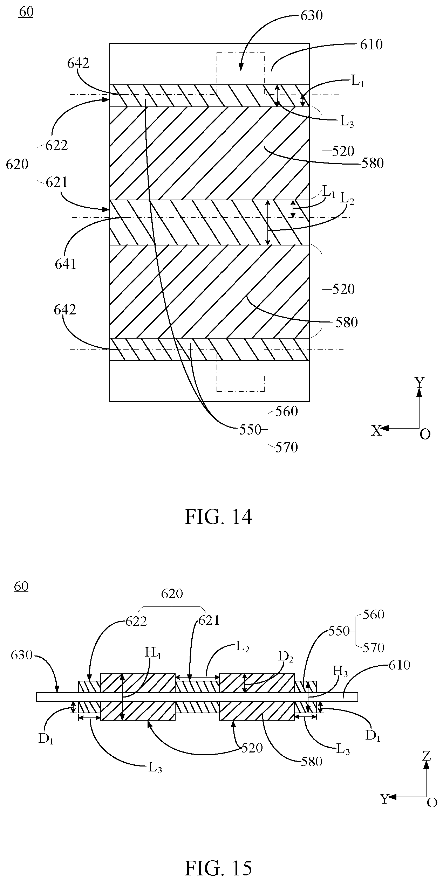

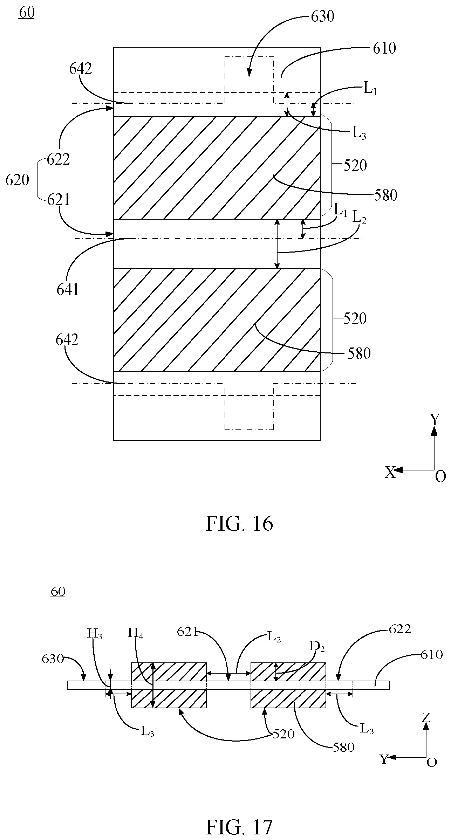

FIG. 13 is a schematic flowchart 100 of a preparation method for an electrode sheet to be cut 60 according to an embodiment of the present application. FIG. 14 is a schematic cross-sectional view of an electrode sheet to be cut 60 according to an embodiment of the present application, FIG. 15 is a schematic cross-sectional view of another electrode sheet to be cut 60 according to another embodiment of the present application, FIG. 16 is a schematic cross-sectional view of another electrode sheet to be cut 60 according to another embodiment of the present application, and FIG. 17 is a schematic cross-sectional view of another electrode sheet to be cut 60 according to another embodiment of the present application. FIG. 14 and FIG. 15 can be understood as schematic cross-sectional views of the same electrode sheet to be cut 60 in different directions. Exemplarily, FIG. 14 may be a schematic cross-sectional view of the electrode sheet to be cut 60 perpendicular to the thickness direction of the electrode sheet to be cut 60, and FIG. 15 may be a schematic cross-sectional view of the electrode sheet to be cut 60 perpendicular to the length direction of the electrode sheet to be cut 60. As another example, FIG. 16 and FIG. 17 can be understood as schematic cross-sectional views of the same electrode sheet to be cut 60 in different directions. FIG. 16 may be a schematic cross-sectional view of the electrode sheet to be cut 60 perpendicular to the thickness direction of the electrode sheet to be cut 60, and FIG. 17 may be a schematic cross-sectional view of the electrode sheet to be cut 60 perpendicular to the length direction of the electrode sheet to be cut 60.

In some implementations, as shown in FIG. 13 to FIG. 17, the preparation method for the electrode sheet 50 in the embodiments of the present application includes step 110 to step 130, namely, 110: providing a second current collector 610, where the second current collector 610 includes a second body and a tab forming region 630 connected to an edge of the second body, and the second body includes a coated region 520 and a cutting region 620; 120: coating a first conductive layer 580 on a surface of the coated region 520, such that a thickness H₃ of the electrode sheet to be cut 60 in the cutting region 620 is less than a thickness H₄ of the electrode sheet to be cut 60 in the coated region 520; and 130: performing cutting in the cutting region 620 to form a target electrode sheet, where the target electrode sheet forms an edge region 530 in the cutting region 620, and a thickness of the target electrode sheet in the edge region 530 is less than a thickness of the target electrode sheet in the coated region 520.

It should be understood that in the embodiments of the present application, the above target electrode sheet includes but is not limited to the electrode sheet 50 shown in FIG. 4 to FIG. 12 above.

It should also be understood that in the embodiments of the present application, the thickness of the target electrode sheet in the edge region 530 may be the thickness H₁ of the electrode sheet 50 in the edge region 530 shown in FIG. 4 to FIG. 12 above. The thickness of the target electrode sheet in the coated region 520 may be the thickness H₂ of the electrode sheet 50 in the coated region 520 shown in FIG. 4 to FIG. 12 above.

It should also be understood that in the embodiments of the present application, the thickness H₃ of the electrode sheet to be cut 60 in the cutting region 620 being less than the thickness H₄ of the electrode sheet to be cut 60 in the coated region 520 may mean that the average thickness H₃ of the electrode sheet to be cut 60 in the cutting region 620 is less than the average thickness H₄ of the electrode sheet to be cut 60 in the coated region 520, or that a maximum thickness H₃ of the electrode sheet to be cut 60 in the cutting region 620 is less than the maximum thickness H₄ of the electrode sheet to be cut 60 in the coated region 520.

It should also be understood that in some implementations, as shown in FIG. 14 and FIG. 16, performing cutting in the cutting region 620 may mean that under the slitting process of the electrode sheet to be cut 60, the cutting region 620 includes a first sub-cutting region 621, the electrode sheet to be cut 60 may be cut along a first cutting line 641, and the cutting region 620 is completely cut along direction X, such that the electrode sheet to be cut 60 is divided into two. In some other implementations, performing cutting in the cutting region 620 may also mean that under the die-cutting process of the electrode sheet to be cut 60, if the cutting region 620 includes a second sub-cutting region 622, the electrode sheet to be cut 60 may be cut along a second cutting line 642 to form a tab portion at an edge of the second current collector 510.

It should also be understood that in the embodiments of the present application, the rectangular electrode sheet to be cut 60 shown in FIG. 14 to FIG. 17 above is only an example, and the shape of the electrode sheet to be cut 60 includes but is not limited to square, parallelogram, and polygon.

In the embodiments of the present application, by controlling the thickness H₃ of the electrode sheet to be cut 60 in the cutting region 620 to be less than the thickness H₄ of the electrode sheet to be cut 60 in the coated region 520, during the cutting process of in the cutting region 620, since the thickness H₃ of the electrode sheet to be cut 60 in the cutting region 620 is less than the thickness H₄ of the electrode sheet to be cut 60 in the coated region 520, the powder falling problem during the cutting process can be alleviated, thereby reducing the risk of internal short circuit of the battery cell 20 caused by overlapping of the positive electrode sheet 502 and the negative electrode sheet 501, and further increasing the yield rate of the battery cell 20.

In some implementations, as shown in FIG. 14 to FIG. 17, the coated region 520 includes at least two sub-coated regions, at least one first sub-cutting region 621 of the cutting region 620 is disposed between two of the sub-coated regions, and the preparation method for the electrode sheet 50 further includes: performing cutting in the first sub-cutting region 621 to form a first edge region 531 on a side of the coated region 520 away from the tab forming region 630.

Exemplarily, as shown in FIG. 14 and FIG. 16, the electrode sheet to be cut 60 may be cut into two target electrode sheets along the first cutting line 641 in the first sub-cutting region 621. It should be understood that the direction of the first cutting line 641 may be set according to actual needs, for example, the cutting direction of the first cutting line 641 may be parallel to direction X, or the cutting direction of the first cutting line 641 may intersect direction X.

It should be understood that in the embodiments of the present application, cutting may be performed in the first sub-cutting region 621 to form a first edge region 531 on a side of the coated region 520 away from the tab forming region 630, and the first edge region 531 may be the first edge region 531 of the electrode sheet 50 shown in FIG. 4 to FIG. 12 above.

In the embodiments of the present application, by disposing at least one first sub-cutting region 621 of the cutting region 620 between two of the sub-coated regions, and configuring the second current collector 610 to be cut in the first sub-cutting region 621, in other words, performing cutting in the first sub-cutting region 621, to form a first edge region 531 on a side of the coated region 520 away from the tab forming region 630, since the thickness of the second current collector 610 in the first sub-cutting region 621 is less than the thickness of the second current collector 610 in the sub-coated region, the powder falling problem during the cutting process can be alleviated, thereby reducing the risk of internal short circuit of the battery cell 20, and further increasing the yield rate of the battery cell 20.

In some implementations, as shown in FIG. 14 to FIG. 17, a second sub-cutting region 622 in the cutting region 620 is disposed between the tab forming region 630 and the coated region 520, and the preparation method for the electrode sheet 50 further includes: performing cutting in the second sub-cutting region 622 to form the tab region 540 and a second edge region 532 of the target electrode sheet, where the second edge region 532 is connected between the tab region 540 and the coated region 520.

It should be understood that in the embodiments of the present application, the tab forming region 630 is used to form the tab of the electrode sheet to be cut 60. Exemplarily, in the die-cutting process of the electrode sheet to be cut 60, cutting can be performed along the second cutting line 642 to form the tab. It should also be understood that in the embodiments of the present application, the number of tabs formed after die-cutting may be set according to actual needs, for example, it may be 1, 2, 3, or the like. Moreover, in the embodiments of the present application, the shape of the tab formed after die-cutting may be set according to actual needs, for example, the shape of the tab may be rectangle, square, trapezoid, or the like.

In the embodiments of the present application, when performing die-cutting treatment on the second current collector 610, for example, laser die-cutting treatment, the die-cutting position is located in the second sub-cutting region 622 between the tab forming region 630 and the coated region 520, since the thickness of the second current collector 610 in the second sub-cutting region 622 is less than the thickness of the second current collector 610 in the coated region 520, the ablation phenomenon appearing at the die-cutting position of the cutting region 620 during the laser die-cutting process can be reduced, and the powder falling phenomenon during the cutting process can be alleviated, thereby reducing the risk of internal short circuit of the battery cell 20, and further increasing the yield rate of the battery cell 20.

In some implementations, as shown in FIG. 14 to FIG. 17, a dimension L₂ of the first sub-cutting region 621 in a first direction satisfies: 0 mm < L₂ ≤ 6 mm, where the first direction is perpendicular to the thickness direction of the target electrode sheet.

Exemplarily, the dimension L₂ of the first sub-cutting region 621 in the first direction may be: 0.1 mm, 0.2 mm, 0.4 mm, 0.6 mm, 0.8 mm, 1.0 mm, 1.2 mm, 1.4 mm, 1.6 mm, 1.8 mm, 2.0 mm, 2.2 mm, 2.4 mm, 2.6 mm, 2.8 mm, 3.0 mm, 3.5 mm, 4.0 mm, 4.5 mm, 5.0 mm, 5.5 mm, 6.0 mm, or a range obtained by any combination of the above two values. In some other implementations, the dimension L₂ of the first sub-cutting region 621 in the first direction may alternatively be: 1 mm ≤ L₂ ≤ 2 mm.

In this way, in the embodiments of the present application, by controlling the dimension L₂ of the first sub-cutting region 621 in the first direction to be in the range of 0 mm < L₂ ≤ 6 mm, the yield rate of the battery cell 20 and the energy density of the battery cell 20 can be balanced.

In some implementations, as shown in FIG. 13 to FIG. 17, a dimension L₃ of the second sub-cutting region 622 in the first direction satisfies: 0 mm < L₃ ≤ 3 mm, where the first direction is perpendicular to the thickness direction of the target electrode sheet.

Exemplarily, the dimension L₃ of the second sub-cutting region 622 in the first direction may be: 0.1 mm, 0.2 mm, 0.4 mm, 0.6 mm, 0.8 mm, 1.0 mm, 1.2 mm, 1.4 mm, 1.6 mm, 1.8 mm, 2.0 mm, 2.2 mm, 2.4 mm, 2.6 mm, 2.8 mm, 3.0 mm, or a range obtained by any combination of the above two values. In some other implementations, the dimension L₃ of the second sub-cutting region 622 in the first direction in the embodiments of the present application may alternatively be: 0.5 mm ≤ L₃ ≤ 1 mm.

In this way, in the embodiments of the present application, by controlling the dimension L₃ of the second sub-cutting region 612 in the first direction to be in the range of 0 mm < L₃ ≤ 3 mm, the yield rate of the battery cell 20 and the energy density of the battery cell 20 can be balanced.

In some implementations, as shown in FIG. 14 and FIG. 15, before the step of performing cutting in the cutting region 620, the method further includes: coating a second conductive layer 560 on a surface of the cutting region 620, where a solid content A₁ of the second conductive layer 560 is less than a solid content A₂ of the first conductive layer 580.

It should be understood that in the embodiments of the present application, the thickness Di of the second conductive layer 560 is less than the thickness D₂ of the first conductive layer 580, and the second conductive layer 560 may be disposed on at least one surface of two surfaces of the cutting region 620 perpendicular to the thickness direction of the cutting region 620.

In this way, in the embodiments of the present application, the second conductive layer 560 is applied on a surface of the cutting region 620, with the solid content A₁ of the second conductive layer 560 less than the solid content A₂ of the first conductive layer 580. During the slitting or die-cutting process of the second current collector 610, since the solid content A₁ of the second conductive layer 560 is less than the solid content A₂ of the first conductive layer 580, in other words, the thickness D₁ of the second conductive layer formed after drying is less than the thickness D₂ of the first conductive layer, compared with cutting in the coated region 520 provided with the first conductive layer 580, when performing cutting in the cutting region 620, the powder falling phenomenon of the conductive layer during the cutting process can be alleviated, thereby reducing the risk of internal short circuit of the battery cell 20, and further increasing the yield rate of the battery cell 20.

In some implementations, the solid content A₁ of the second conductive layer 560 satisfies: 0% < A₁ ≤ 1%.

It should be understood that the solid content in the embodiments of the present application refers to the percentage of the mass of the remaining part after drying the slurry used for coating on the surface of the second current collector 610 under specified conditions to the mass of the original slurry. Exemplarily, in the embodiments of the present application, conductive carbon material and carboxymethyl cellulose are mixed in a certain ratio to form a coating slurry with a solid content of 0.5%, and it is uniformly coated on the surface of the edge region 530 of the electrode sheet 50, and after drying, compaction, and other processes, the second conductive layer 560 is formed.

Exemplarily, the solid content A₁ of the second conductive layer 560 in the embodiments of the present application may be: 0.01%, 0.03%, 0.05%, 0.07%, 0.09%, 0.1%, 0.2%, 0.25%, 0.3%, 0.4%, 0.5%, 0.6%, 0.7%, 0.75%, 0.8%, 0.9%, 1%, or a range obtained by any combination of the above two values. In some other implementations, the solid content A₁ of the second conductive layer 560 in the embodiments of the present application may be: 0.25% < A₁ ≤ 0.75%.

In this way, in the embodiments of the present application, by controlling the range of the solid content A₁ of the second conductive layer 560 to be in the range of 0% < A₁ ≤ 1%, the risk of internal short circuit of the battery cell 20 can be reduced, thereby increasing the yield rate of the battery cell 20.

In some implementations, the second conductive layer 560 is applied on a surface of the second current collector 610 through a micro intaglio coating process.

It should be understood that when coating the second current collector 610 in the embodiments of the present application, a gravure coating process is usually used. In the gravure coating process, a back roller is provided, and the role of the back roller is to make the second current collector 610 be in better contact with the gravure roller, such that more coating liquid is transferred to the surface of the second current collector 610. However, at the same time, due to the large pressure generated by the back roller, wrinkles may be generated in the coating layer on the surface of the second current collector 610, resulting in uneven coating, affecting the yield rate of the battery cell 20. The micro intaglio coating process in the embodiments of the present application uses one gravure roller, the surface of the gravure roller is mounted on a bearing, which is partially immersed in the feed tray, and the coating is brought up by the rotating shaft, quantified by a flexible doctor blade, and then taken away by the reverse-moving second current collector 610. That is, the micro intaglio coating process adopts a kiss coating method. The rotation direction of the gravure roller in the micro intaglio coating process is opposite to the movement direction of the second current collector 610, with no back roller to press the second current collector 610 on the gravure roller. A very thin coating layer may be applied to the surface of the second current collector 610, and uniform thin-layer coating can be achieved.

In the embodiments of the present application, by coating the second conductive layer 560 on a surface of the second current collector 610 through the micro intaglio coating process, uniform coating of the second current collector 610 can be achieved, and the bonding force between the surface of the second current collector 610 and the second conductive layer 560 can be enhanced, thereby effectively alleviating the powder falling problem during the cutting process, reducing the risk of internal short circuit of the battery cell 20, and further increasing the yield rate of the battery cell 20.

In some implementations, as shown in FIG. 14 to FIG. 17, the solid content A₂ of the first conductive layer 580 satisfies: 1.5% ≤ A₂ ≤ 10%.

Exemplarily, the solid content A₂ of the first conductive layer 580 in the embodiments of the present application may be: 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a range obtained by any combination of the above two values. In some other implementations, the solid content A₂ of the first conductive layer 580 in the embodiments of the present application may be: 2% ≤ A₂ ≤ 5%.

In this way, in the embodiments of the present application, by controlling the solid content A₂ of the first conductive layer 580 to be in the range of 1.5% ≤ A₂ ≤ 10%, the deposition amount of metal ions in the coated region of the electrode sheet can be improved, and the energy density of the battery cell 20 can be increased.

In some implementations, as shown in FIG. 14 and FIG. 15, before the step of performing cutting in the cutting region 620, the preparation method for the electrode sheet 50 further includes: disposing an insulating layer 570 on a surface of the cutting region 620.

It should be understood that in the embodiments of the present application, the thickness of the insulating layer 570 is less than the thickness of the first conductive layer 580, and the insulating layer 570 may be disposed on at least one surface of two surfaces of the cutting region 620 perpendicular to the thickness direction of the cutting region 620.

In this way, in the embodiments of the present application, during the cutting process of the second current collector 610, by disposing the insulating layer 570 on a surface of the cutting region 620, with the thickness H₃ of the second current collector 610 in the cutting region 620 less than the thickness H₄ of the second current collector 610 in the coated region 520, the powder falling problem during the cutting process can be effectively alleviated, the risk of internal short circuit of the battery cell 20 can be significantly reduced, and the yield rate of the battery cell 20 can be increased.

In some implementations, as shown in FIG. 16 and FIG. 17, the cutting region 620 includes a bare foil region. In this way, in the embodiments of the present application, by disposing a bare foil region on a surface of the cutting region 620, be specific, exposing the surface of the cutting region 620 of the second current collector 610, the powder falling problem during the cutting process can be effectively alleviated, the risk of internal short circuit of the battery cell 20 can be significantly reduced, and the yield rate of the battery cell 20 can be increased.

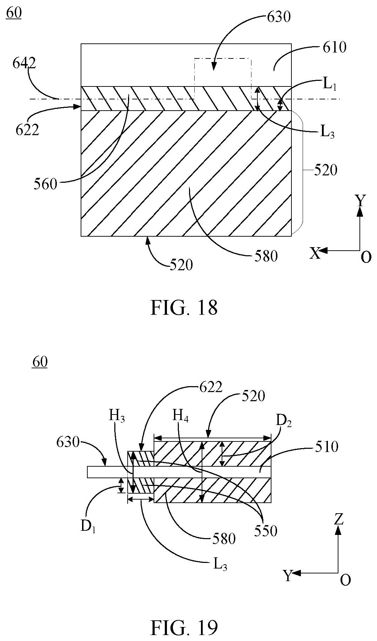

FIG. 18 is a schematic cross-sectional view of an electrode sheet to be cut 60 according to another embodiment of the present application, and FIG. 19 is a schematic cross-sectional view of an electrode sheet to be cut 60 according to another embodiment of the present application. FIG. 18 and FIG. 19 can be understood as schematic cross-sectional views of the same electrode sheet to be cut 60 in different directions. Exemplarily, FIG. 18 may be a schematic cross-sectional view of the electrode sheet to be cut 60 perpendicular to the thickness direction of the electrode sheet to be cut 60, and FIG. 19 may be a schematic cross-sectional view of the electrode sheet to be cut 60 perpendicular to the length direction of the electrode sheet to be cut 60.

In some implementations, as shown in FIG. 18 and FIG. 19, an electrode sheet to be cut 60 is provided, the electrode sheet to be cut 60 includes a second current collector 610, the second current collector 610 includes a tab forming region 630, a coated region 520, and a second sub-cutting region 622, the second sub-cutting region 622 is disposed between the tab forming region 630 and the coated region 520, a first conductive layer 580 is coated on a surface of the coated region 520, the thickness D₂ of the first conductive layer 580 is 5 mm, a second conductive layer 560 is applied on a surface of the second sub-cutting region 622 by a micro intaglio coating process, the thickness D₁ of the second conductive layer 560 is 0.5 mm, and the dimension L₃ of the second sub-cutting region 622 in the width direction of the electrode sheet to be cut 60 is 2 mm. During the cutting process of the electrode sheet to be cut 60, cutting can be performed in the second sub-cutting region 622 along the second cutting line 642 to form a target electrode sheet.

In some implementations, referring again to FIG. 4 and FIG. 5 above, an electrode sheet 50 is provided, the electrode sheet 50 includes: a first current collector 510 and a first conductive layer 580, where the first current collector 510 includes a first body and a tab region 540 connected to an edge of the first body, the first body includes a coated region 520 and an edge region 530, the first conductive layer 580 is disposed on a surface of the coated region 520; and a thickness of the electrode sheet 50 in the edge region 530 is less than a thickness of the electrode sheet 50 in the coated region 520; the edge region 530 includes a first edge region 531 and a second edge region 532, where the first edge region 531 is connected to a side of the coated region 520 away from the tab region 540, and the second edge region 532 is connected between the tab region 540 and the coated region 520. The edge region 530 of the electrode sheet 50 is a bare foil region, that is, the surface of the edge region 530 of the electrode sheet 50 is exposed. The dimension of the first edge region 531 in the width direction of the electrode sheet 50 is 2 mm, and the dimension of the second edge region 532 in the width direction of the electrode sheet 50 is 2.5 mm.

Although the present application has been described with reference to the above embodiments, various improvements can be made thereto without departing from the scope of the present application, and equivalent replacements can be used for components therein. In particular, as long as there is no structural conflict, any technical features mentioned in various embodiments can be combined in any manner. The present application is not limited to the specific embodiments disclosed herein, but includes all technical solutions falling within the scope of the claims.

## Claims

1. An electrode sheet, **characterized by** comprising:
a first current collector, wherein the first current collector comprises a first body and a tab region connected to an edge of the first body, and the first body comprises a coated region and an edge region; and
a first conductive layer, wherein the first conductive layer is disposed on a surface of the coated region;
wherein a thickness of the electrode sheet in the edge region is less than a thickness of the electrode sheet in the coated region.

2. The electrode sheet according to claim 1, **characterized in that** a dimension L₁ of the edge region in a first direction satisfies: 0 mm < L₁ ≤ 3 mm, the first direction being perpendicular to a thickness direction of the electrode sheet.

3. The electrode sheet according to claim 1 or 2, **characterized in that** the electrode sheet further comprises a first layer disposed on a surface of the edge region, wherein a thickness of the first layer is less than a thickness of the first conductive layer.

4. The electrode sheet according to claim 3, **characterized in that** a thickness D₁ of the first layer satisfies: 0 mm < D₁ ≤ 1 mm.

5. The electrode sheet according to claim 3 or 4, **characterized in that** the first layer comprises a second conductive layer.

6. The electrode sheet according to claim 5, **characterized in that** a material of the second conductive layer comprises at least one of the following materials: carbon nanotubes, graphene, conductive graphite, and conductive carbon.

7. The electrode sheet according to claim 3 or 4, **characterized in that**, the first layer comprises an insulating layer.

8. The electrode sheet according to claim 7, **characterized in that** a material of the insulating layer comprises at least one of the following materials: boehmite, polyvinylidene fluoride, and ethylene propylene diene monomer rubber.

9. The electrode sheet according to claim 1 or 2, **characterized in that** the edge region comprises a bare foil region.

10. The electrode sheet according to any one of claims 1 to 9, **characterized in that** a thickness D₂ of the first conductive layer satisfies: 2 mm ≤ D₂ ≤ 20 mm.

11. The electrode sheet according to any one of claims 1 to 10, **characterized in that** the edge region comprises a first edge region, wherein the first edge region is connected to a side of the coated region away from the tab region, and/or
the edge region comprises a second edge region, wherein the second edge region is connected between the tab region and the coated region.

12. A battery cell, **characterized by** comprising an electrode assembly, wherein the electrode assembly comprises the electrode sheet according to any one of claims 1 to 11.

13. The battery cell according to claim 12, **characterized in that** the electrode sheet is a negative electrode sheet, the electrode assembly further comprises a positive electrode sheet, and a position of a region of the positive electrode sheet corresponding to the edge region of the negative electrode sheet is provided with an insulating layer.

14. The battery cell according to claim 12 or 13, **characterized in that** the battery cell is an alkali metal battery cell.

15. A battery, **characterized by** comprising the battery cell according to any one of claims 12 to 14.

16. An electric device, **characterized by** comprising the battery according to claim 15, wherein the battery is configured to provide electrical energy to the electric device.

17. A preparation method for an electrode sheet, **characterized by** comprising:
providing a second current collector, wherein the second current collector comprises a second body and a tab forming region connected to an edge of the second body, and the second body comprises a coated region and a cutting region;
coating a first conductive layer on a surface of the coated region, such that a thickness of the electrode sheet in the cutting region is less than a thickness of the electrode sheet in the coated region; and
performing cutting in the cutting region to form a target electrode sheet;
wherein the target electrode sheet forms an edge region in the cutting region, and a thickness of the target electrode sheet in the edge region is less than a thickness of the target electrode sheet in the coated region.

18. The method according to claim 17, **characterized in that** the coated region comprises at least two sub-coated regions, a first sub-cutting region of the cutting region is disposed between two of the sub-coated regions, and the method further comprises: performing cutting in the first sub-cutting region to form a first edge region on a side of the coated region away from the tab forming region.

19. The method according to claim 17 or 18, **characterized in that** a second sub-cutting region in the cutting region is disposed between the tab forming region and the coated region, and the method further comprises:
performing cutting in the second sub-cutting region to form the tab region and a second edge region of the target electrode sheet, wherein the second edge region is connected between the tab region and the coated region.

20. The method according to claim 18, **characterized in that** a dimension L₂ of the first sub-cutting region in a first direction satisfies: 0 mm < L₂ ≤ 6 mm, wherein the first direction is perpendicular to a thickness direction of the target electrode sheet.

21. The method according to claim 19, **characterized in that** a dimension L₃ of the second sub-cutting region in a first direction satisfies: 0 mm < L₃ ≤ 3 mm, wherein the first direction is perpendicular to a thickness direction of the target electrode sheet.

22. The method according to any one of claims 17 to 21, **characterized in that**
before the step of performing cutting in the cutting region, the method further comprises:
coating a second conductive layer on a surface of the cutting region, wherein a solid content of the second conductive layer is less than a solid content of the first conductive layer.

23. The method according to claim 22, **characterized in that** a solid content A₁ of the second conductive layer satisfies: 0% < A₁ ≤ 1 %.

24. The method according to claim 22 or 23, **characterized in that** the second conductive layer is applied on a surface of the second current collector by a micro intaglio coating process.

25. The method according to any one of claims 17 to 24, **characterized in that** a solid content A₂ of the first conductive layer satisfies: 1.5% ≤ A₂ ≤ 10%.

26. The method according to any one of claims 17 to 21, **characterized in that** before the step of performing cutting in the cutting region, the method further comprises: disposing an insulating layer on a surface of the cutting region.

27. The method according to any one of claims 17 to 21, **characterized in that** the cutting region comprises a bare foil region.
